## Europäisches Patentamt

## European Patent Office

(19)

## Office européen des brevets

(11) Veröffentlichungsnummer: **0 138 859**

**B1**

(12) # EUROPÄISCHE PATENTSCHRIFT

(45) Veröffentlichungstag der Patentschrift:
**14.01.87**

(51) Int. Cl.⁴: **F 16 B 13/04**

(21) Anmeldenummer: **84900979.0**

(22) Anmeldetag: **02.03.84**

(86) Internationale Anmeldenummer:
**PCT/EP 84/00059**

(87) Internationale Veröffentlichungsnummer:
**WO 84/03741 (27.09.84 Gazette 84/23)**

(54) **SPREIZDÜBEL MIT SETZKRAFTANZEIGE.**

(30) Priorität: **19.03.83 DE 3310001**

(43) Veröffentlichungstag der Anmeldung:
**02.05.85 Patentblatt 85/18**

(45) Bekanntmachung des Hinweises auf die Patenterteilung:
**14.01.87 Patentblatt 87/3**

(84) Benannte Vertragsstaaten:
**AT BE CH FR GB LI NL SE**

(56) Entgegenhaltungen:
**EP-A-0 002 654**
**DE-A-3 022 011**
**FR-A-2 362 299**
**US-A-1 852 297**

(73) Patentinhaber: **Liebig, Heinrich, Wormser Strasse 23, D-6102 Pfungstadt (DE)**

(72) Erfinder: **Liebig, Heinrich, Wormser Strasse 23, D-6102 Pfungstadt (DE)**

(74) Vertreter: **Helber, Friedrich G., Dipl.- Ing., Giesser Weg 47, D-6144 Zwingenberg (DE)**

EP 0 138 859 B1

## Beschreibung

Die Erfindung betrifft einen in ein Bohrloch im Untergrund einsetzbaren Spreizdübel mit einer durch Längsschlitzung in Lamellen unterteilten Spreizhülse, die durch wenigstens einen in das bohrungsinnere Ende der Spreizhülse, vorzugsweise zwei mit ihren verjüngten Enden aufeinander zu weisend in die gegenüberliegenden Enden der Spreizhülse eingreifende(n) konische(n) Spreizkörper unter radialer Aufweitung aufspreizbar ist, indem ein mit seinem bohrungsinneren Ende in den bohrungsinneren Spreizkörper eingreifender Gewindebolzen angezogen wird, der den gegebenenfalls vorgesehenen bohrungsmündungsseitigen Spreizkörper längsverschieblich durchsetzt und an dessen bohrungsäußerem Ende ein Bolzenkopf bzw. eine Mutter angeordnet ist, welcher bzw. welche über eine den Gewindebolzen umgebende Distanzhülse an der Spreizhülse bzw. dem gegebenenfalls vorgesehenen bohrungsmündungsseitigen Spreizkörper abgestützt ist, wobei an der dem Untergrund zugewandten Unterseite des Bolzenkopfs bzw. der Mutter eine ein zu befestigendes Werkstück auf der Oberfläche des Untergrundes aufspannende Unterlegscheibe und zwischen dem Bolzenkopf bzw. der Mutter und der Spreizhülse bzw. dem bohrungsmündungsseitigen Spreizkörper ein hülsenförmiger Rohrabschnitt aus einem weichen Stahl mit ausgeprägter Fließgrenze (Quetschgrenze) vorgesehen ist, dessen Wandstärke so bemessen ist, daß beim Aufbringen einer dübelspezifischen Setzkraft in diesem Rohrabschnitt gerade Druckspannungen herrschen, welche gleich den bei Erreichen der Fließgrenze (Quetschgrenze) im Material des Rohrabschnitts herrschenden Spannungen sind.

Wenn Werkstücke mit Dübeln auf oder an einem Untergrund befestigt werden sollen, wird die je Dübel erreichbare höchste Haltekraft, und damit auch die höchste Beanspruchbarkeit und Lebensdauer der Befestigungsanordnung, ganz allgemein dann erreicht, wenn die für den jeweiligen Dübel charakteristische Setzkraft, d.h. die im Hinblick auf den jeweiligen Beanspruchungsfall und die Querschnittsfläche des Gewindebolzens zulässige Zugkraft bzw. die zulässigen Zugspannungen im Gewindebolzen eingehalten werden. Dabei ist es aber für ein schlupffreies Setzen der Spreizhülse wichtig, daß beim Setzvorgang in den Dübel einmal eine dübelspezifische maximal zulässige Setzkraft eingeleitet wird, die andererseits nicht überschritten werden darf, um den Gewindebolzen nicht zu überlasten. Da die im Gewindebolzen herrschende kraft bzw. die Zugspannungen nicht direkt meßbar sind, schreiben die Dübelhersteller für den jeweiligen Dübel aufgrund der im Querschnitt des jeweiligen Gewindebolzens unter Berücksichtigung von dessen Materialfestigkeit zulässigen Zugspannung berechnete, an der auf dem Gewindebolzen aufgeschraubten Mutter bzw. dessen Bolzenkopf aufzubringende Anzugsmomente vor, deren Einhaltung mit Drehmomentenschlüsseln leicht sichergestellt werden kann. In der Praxis entspricht nun aber das berechnete (und vorgeschriebene) Anzugsmoment nicht der im Hinblick auf die Belastbarkeit des Gewindebolzens zulässigen Setzkraft. Infolge von zwischen den Dübelbauteilen beim Setzvorgang auftretender Reibung wird nur ein Teil des ausgeübten Anzugsmoments in eine Spannung im Gewindebolzen umgesetzt. Wenn der Reibungsverlust bei Dübeln gleichen konstruktiven Aufbaus jeweils in etwa gleich wäre, könnte das einfach durch entsprechend höhere vorgeschriebens Anzugsmomente berücksichtigt werden, d.h. man könnte einen Anzugs-Wirkungsgrad einführen. Leider schwankt aber die bei gleichartigen Dübeln mit gleicher Anzugskraft erzielte Setzkraft so stark, daß ihre korrekts Festlegung durch rechnerische Korrektur des Anzugsmoments nicht möglich ist. Es wurde daher bereits ein Dübel entwickelt (DE-A- 30 22 011), bei dem das Erreichen der vorgeschriebenen Setzkraft unbeeinflußt von den beim Anziehen des Dübels auftretenden unterschiedlichen Reibungswiderständen durch eine kugelabschnittsförmig gewölbte Unterlegscheibe angezeigt wird. Durch geeignete Materialwahl und Bemessung weist diese Unterlegscheibe nämlich einen Verformungswiderstand auf, der bei axialen Verformungen aus der ursprünglichen Kugelschalenabschnittsform zur ebenflächigen Scheibe gerade der Größe der für den betreffenden Dübel vorgeschriebenen Setzkraft entspricht, d.h. ein mit dieser Unterlegscheibe ausgerüsteter Dübel ist gerade dann mit der vorgeschriebenen Anzugskraft gesetzt, wenn die Unterlegscheibe aus ihrer Kugelschalenabschnittsform bis in satte ebenflächige Anlage an das zu befestigende Werkstück bzw. den Untergrund verformt ist. Die Setzkraftanzeige durch eine solche verformbare Unterlegscheibe hat noch nicht voll befriedigt, weil einerseits die geringen Verformungsunterschiede der Unterlegscheibe kurz vor Erreichen der völlig ebenen Form nur schwer eindeutig wahrnehmbar sind, so daß nicht ganz auszuschließen ist, daß die Mutter bzw. der Bolzenkopf des Dübels mit zu geringer oder - was noch gefährlicher ist - mit zu hoher Anzugskraft angezogen wird.

Demgegenuber wird bei einem Dübel gemäß einem älteren, nicht vorveröffentlichten Vorschlag des Erfinders die axiale Verformbarkeit eines hülsenförmigen Rohrabschnitts aus (weichem) Stahl mit ausgeprägter Fließgrenze ausgenutzt, dessen Wandstärke so bemessen ist, daß beim Aufbringen der dübelspezifischen Setzkraft in diesem Rohrabschnitt gerade Druckspannungen herrschen, welche gleich den bei Erreichen der Fließgrenze im Material des Rohrabschnitts herrschenden Spannungen sind. Der hülsenförmige Rohrabschnitt fängt also bei Erreichen der vorgeschriebenen Setzkraft an, sich deutlich sichtbar in Axialrichtung zu verformen, ohne daß hierbei eine weitere Erhöhung der Materialbeanspruchung auftritt. Um den axialen Anzugsweg zur Verfügung zu stellen und die Verformung des Rohrabschnitts bei Erreichen der vorgeschriebenen Setzkraft auch beobachten zu können, muß der Dübel so gesetzt werden, daß zwischen der Oberfläche des zu befestigenden Werkstücks und der dieser zugewandten Unterseite des Dübel-Bolzenkopfs bzw. der Mutter zunächst ein hinreichender Abstand herrscht. Bei dem Dübel gemäß dem älteren Vorschlag wird dies durch ein leicht verformbares, am Dübel selbst gehaltenes Nachlaufelement erreicht, auf welches aber dann verzichtet werden kann, wenn der erforderliche Abstand beim Ansetzen des Dübels durch eine zwischengeschobene Abstandslehre eingestellt wird, die nach dem ersten Andrehen des Dübels wieder herausgezogen wird.

Der Erfindung liegt die Aufgabe zugrunde, den Dübel gemäß dem älteren Vorschlag dahingehend zu verbessern, daß die beim Erreichen der vorgeschriebenen Setzkraft auftretende Verformung des Rohrabschnitts noch exakter auslösbar und durch das Montagepersonal eindeutig feststellbar ist.

Ausgehend von einem Dübel der eingangs erwähnten Art wird diese Aufgabe erfindungsgemäß dadurch gelöst, daß der Rohrabschnitt in dem sich bei Erreichen der dübelspezifischen Setzkraft in Axialrichtung verformenden Bereich in einer dünnen Oberflächenschicht gehärtet ist. Die Härteschicht erhöht die Druckfestigkeit des axial verformbaren Rohrabschnitts, so daß sein Verformungsquerschnitt also verringert werden kann. Bei Erreichen der vorgeschriebenen Setzkraft bricht die dünne Härteschicht spröde und vermag dann keinen Anteil mehr zur Druckübertragung in Axialrichtung zu geben. Das nicht gehärtete, weiche Restmaterial kann nun mit erheblich verringerter Kraft plastisch verformt werden, d.h. nach dem Bruch der Härteschicht fällt die zum Setzen des Dübels erforderliche Axialkraft stark ab und bei dieser verringerten Axialkraft ist eine relativ starke axiale Stauchung möglich, so daß das Erreichen der vorgeschriebenen Setzkraft des Dübels also durch die auftretende starke axiale Stauchung bei verringerter erforderlicher Anzugskraft erkennbar wird.

Der Rohrabschnitt wird vorzugsweise aus Stahl mit niedrigem Kohlenstoffgehalt hergestellt, in dessen zu härtenden Oberflächenbereiche vor der Härtung Kohlenstoff entsprechend der Dicke der zu erzielenden Härteschicht eindiffundiert ist. Da der für die Härtung erforderliche Kohlenstoff dann nur in der dünnen Oberflächenschicht vorhanden ist, ist ein versehentliches Durchhärten des Rohrabschnitts nicht möglich.

In vorteilhafter Weiterbildung der Erfindung ist der Rohrabschnitt von wenigstens einer, vorzugsweise zwei oder mehr in Axialrichtung zueinander versetzten umlaufenden Eindrehungen in einem gesondert zwischen der Distanzhülse und der Spreizhülse bzw. dem bohrungsmündungsseitigen Spreizkörper angeordneten Hülsenabschnitt gebildet, wobei der Hülsenabschnitt zweckmäßig insgesamt auf seiner Außen- und Innenseite oberflächengehärtet ist.

Alternativ kann der Rohrabschnitt auch von wenigstens einer, vorzugsweise zwei oder mehr in Axialrichtung versetzten umlaufenden Eindrehungen in der Distanzhülse selbst gebildet werden, die dann ebenfalls auf ihrer Außen- und Innenfläche oberflächengehärtet ist.

Um den erforderlichen Verformungsweg des Rohrabschnitts zu gewährleisten, empfiehlt es sich - wie beim Dübel gemäß dem älteren Vorschlag - zwischen der Unterseite des Bolzenkopfs bzw. der Mutter und dem zu befestigenden Werkstück ein unter Einfluß einer in Axialrichtung wirkenden relativ geringen Kraft um das Maß der axialen Stauchung des Rohrabschnitts bei Erreichen der dübelspezifischen Setzkraft in Axialrichtung zusammendrückbares Nachlaufelement anzuordnen.

Die Erfindung ist in der folgenden Beschreibung eines Ausführungsbeispiels in Verbindung mit der Zeichnung naher erläutert, und zwar zeigt bzw. zeigen:

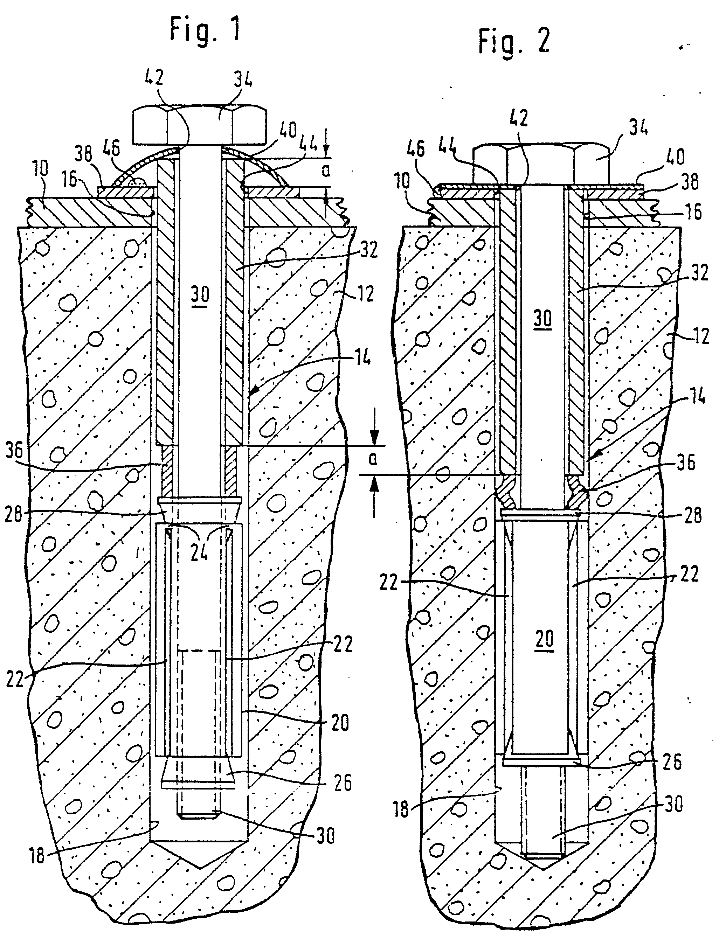

Fig. 1 und 2 jeweils eine Schnittansicht durch eine unter Verwendung eines in der erfindungsgemäßen Weise ausgebildeten Dübels hergestellte Dübel-Befestigungsanordnung, bei welcher ein Werkstück mit einem teilweise geschnitten dargestellten doppelt spreizenden Dübel auf einer Unterlage befestigt wird, wobei Fig. 1 den Dübel in lose angesetztem Zustand und Fig. 2 den fertig gesetzten Dübel zeigt; und

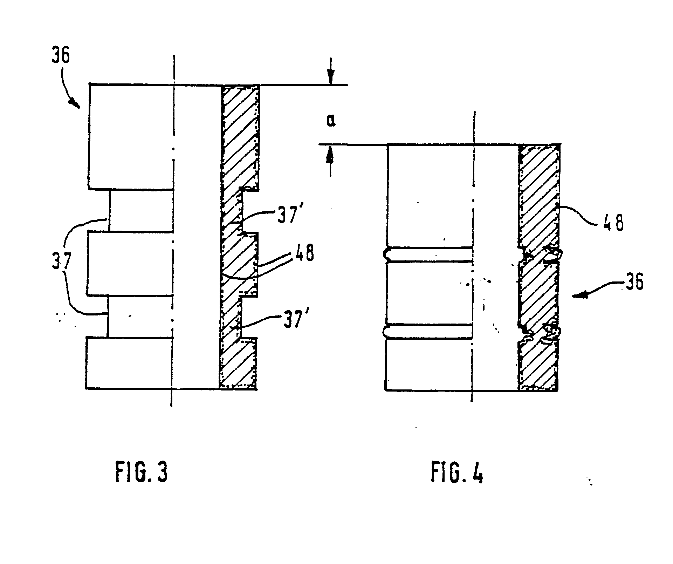

Fig. 3 und 4 jeweils eine im Halbschnitt gezeigte Seitenansicht des beim Dübel gemäß den Fig. 1 und 2 vorgesehenen, in Axialrichtung verformbaren Hülsenabschnitts in unverformtem Ausgangszustand einerseits bzw. in dem nach Setzen des Dübels mit der vorgeschriebenen Setzkraft eingedrehten und verformten Zustand andererseits.

Das in den Figuren 1 und 2 gezeigte Ausführungsbeispiel zeigt eine Befestigungsanordnung eines Werkstücks 10 auf einem Untergrund 12, der beispielsweise ein Betonboden sein möge. Die Befestigung erfolgt in diesem Fall mittels eines sogenannten doppelt spreizenden Dübels 14, der in Durchsteckmontage durch die Befestigungsbohrung 16 im Werkstück 10 in ein Bohrloch 18 im Untergrund 12 eingeschoben ist. Der Dübel 14 weist als Verankerungsbauteil eine Spreizhülse 20 auf, die vom bohrungsinneren Ende her durch eingearbeitete Längsschlitze 22 in einzelne lamellenartige Abschnitte unterteilt ist. Die Schlitze 22 sind nicht ganz bis zum oberen Ende der Spreizhülse geführt, so daß die Spreizhülse also am oberen Ende durch die verbleibenden Reststege 24 zusammengehalten wird, die als Sollbruchstege dienen, welche erst während des Setzvorgangs aufbrechen.

In die Enden der Spreizhülse 20 sind jeweils die verjüngten Enden von kegelstumpfförmigen Spreizkörpern 26 und 28 eingesetzt, wobei ein den Dübel 14 über seine gesamte Länge durchsetzender Gewindebolzen 30 in eine Gewindebohrung im bohrungsinneren Spreizkörper 26 eingeschraubt ist. Im anderen Spreizkörper 28 ist eine glatte Durchgangsbohrung vorgesehen, durch welche der Gewindebolzen 30 mit Spiel hindurchtritt. Auf den oberhalb des letzterwähnten Spreizkörpers 28 liegenden Abschnitt des Gewindebolzens 30 ist eine Distanzhülse 32 aufgesetzt, welche die Spannkraft eines am äußeren Ende des Gewindebolzens 30 angestauchten Bolzenkopfs 32 auf den Spreizkörper 28 überträgt, wobei zwischen der Stirnfläche am unteren Ende der Distanzhülse 32 und der zur Bohrungsmündung weisenden Stirnfläche des Spreizkörpers 28 noch ein Hülsenabschnitt 36 aus weichem Stahl, d.h. einem Stahl mit ausgeprägter Fließgrenze angeordnet ist, der - wie im folgenden in Verbindung mit den Figuren 3 und 4 noch näher erläutert wird - auf seiner Oberfläche in einer dünnen Schicht gehärtet ist. Der in seinem Durchmesser und der Wandstärke etwa der Distanzhülse entsprechend bemessene Hülsenabschnitt 35 weist zwei axial versetzte, umlaufende Eindrehungen 37 auf, deren Tiefe jeweils so bemessen ist, daß im verbleibenden Materialquerschnitt 37' beim Anziehen des Gewindebolzens 30 mit der für den Dübel 14 vom Hersteller vorgeschriebenen Setzkraft die einwirkende Axialkraft Druckspannungen hervorruft, welche so hoch sind, daß der Hülsenabschnitt sich im Bereich der Eindrehungen 37 axial zusammendrückt. Der Rohrabschnitt 35 verformt sich also im Bereich der Eindrehungen unter axialer Verkürzung plastisch in die in Fig. 2 schematisch angedeutete Gestalt, ohne daß die Anzugskraft über die zulässige Setzkraft hinausgesteigert werden müßte, wenn der Materialquerschnitt 37' im Bereich der Eindrehung 37 unter Berücksichtigung der Festigkeitssteigerung durch die Oberflächen-Härteschicht so bemessen ist, daß die Härteschicht spröde aufbricht und der Materialquerschnitt dann über die materialspezifische Fließgrenze (Quetschgrenze) hinaus beansprucht ist. Diese beim Anziehen des Dübels gerade bei Erreichen der Setzkraft auftretende, vorbestimmbare axiale Stauchung a des Rohrabschnitts 36 ist - abhängig von der axialen Erstreckung der Eindrehungen 37-relativ stark, kann aber nur dann beobachtet werden, wenn das bohrungsmündungsseitige Ende der Distanzhülse 32 um dieses Stauchungsmaß a über die Oberseite des Werkstücks 10 bzw. einer auf dem Werkstück aufsitzenden ebenflächigen Unterlegscheibe 38 übersteht. Um diesen, dem axialen Stauchungsmaß a entsprechenden Überstand der Distanzhülse 32 beim Setzen des Dübels zwangsläufig zur Verfügung zu stellen, ist zwischen der Unterseite des Bolzenkopfs 34 und der bohrungsmündungsseitigen Stirnfläche der Distanzhülse 32 ein mit relativ geringen Kräften axial verformbares Nachlaufelement 40 angeordnet, welches beim dargestellten Ausführungsbeispiel die Form einer aus dünnem Blech geprägten kugelkalottenförmigen Schale mit mittiger Durchgangsöffnung 42 für den Gewindebolzen 30 hat, deren konkaver Hohlraum zum Werkstück 10 bzw. der ebenflächigen Unterlegscheibe 38 weist und in Axialrichtung so tief bemessen ist, daß die Distanzhülse 32 bei auf dem Werkstück bzw. der Unterlegscheibe abgestütztem freiem Rand des Nachlaufelements 40 um das Maß a in diesen Hohlraum vortritt, wie dies in Fig. 1 gezeigt ist. Das Nachlaufelement kann aber auch entfallen, wenn beim Setzen des Dübels zwischen die Unterseite des Bolzenkopfs 34 und die Unterlegscheibe 38 eine gabelförmige Abstandslehre mit dem Dickenmaß a eingeschoben wird, die es ermöglicht, den Dübel mit um das Maß a überstehender Distanzhülse 32 anzusetzen, und die nach leichtem Spannen des Dübels wieder herausgezogen wird.

Beim Anziehen des zunächst in der in Fig. 1 gezeigten Weise lose angesetzten Dübels wird zunächst der bohrungsinnere Spreizkörper 26 in das zugeordnete Ende der Spreizhülse 20 hineingezogen, so daß diese sich aufweitet und an der Umfangswandung des Bohrlochs 18 zur Anlage kommt. Die Spreizhülse wird dadurch in Axialrichtung im Bohrloch 18 fixiert und bei weiterem Anziehen schraubt sich zwangsläufig der Gewindeschaft 30 in die Bohrung hinein, wobei die Unterseite des Bolzenkopfs unter Verformung des Nachlaufelements 40 die Distanzhülse 32 ins Bohrlochinnere schiebt. Über den Hülsenabschnitt 36 wird diese Verschiebung auf den Spreizkörper 28 übertragen, der einen oder mehrere der Stege 24 der Spreizhülse 20 sprengt und anschließend auch das bohrungsmündungsseitige Ende der Spreizhülse aufweitet, wodurch sie sich in der in Fig. 2 veranschaulichten Weise satt an der Wandung des Bohrlochs anlegt. Bei weiterer Drehung des Gewindebolzens 30 steigt dann die Anzugskraft schnell, bis sie eine solche Größe hat, daß die Druckspannungen in den im Bereich der Eindrehungen 37 verbleibenden Materialquerschnitten 37' die Höhe der für das Material des Hülsenabschnitts 36 charakteristischen Fließspannungen überschreiten, nachdem die Oberflächen-Härteschicht spröde aufgebrochen sind. Dann staucht sich der Rohrabschnitt 36 in der bereits beschriebenen Weise, wobei der Gewindebolzen mit merklich verringerter Anzugskraft soweit anziehbar ist, bis das Nachlaufelement 40 flachgedrückt ist und eben auf der Unterlegscheibe 38 aufsitzt. Infolge der vorausgesetzten Bemessung der Eindrehungen 37 ist die höchste Anzugskraft, bei welcher die Materialqueischnitte 37' sich zu verformen beginnen, aber gerade gleich der vorgeschriebenen Setzkraft. D.h. wenn der Bolzenkopf 34 bis zur ebenflächigen Auflage des Nachlaufelements 40 auf die Unterlegscheibe 38 angezogen ist, ist der Dübel vorschriftsmäßig gesetzt, d.h. seine vorgeschriebene Setzkraft ist wenigstens einmal erreicht worden, bevor sie bei der axialen Verformung des Hülsenabschnitts 36 im Bereich der Eindrehungen 37 zum Teil wieder abgebaut wurde. Der gleiche Effekt wird natürlich auch dann erreicht, wenn der Gewindebolzen 30 ein durchgehender Gewindebolzen ist, auf welchen anstelle des angestauchten Bolzenkopfs 34 eine Mutter aufgeschraubt ist. Da die Distanzhülse sich beim Setzen des Dübels durch die Mittelbohrung 44 der Unterlegscheibe 38 verschiebt, muß der Durchmesser der Bohrung 44 der Unterlegscheibe also etwas größer als der Außendurchmesser der Distanzhülse 32 bemessen sein. Eine lose auf den Dübel aufgesetzte Unterlegscheibe könnte also vom Dübel abgestreift werden und verlorengehen. Aus diesem Grund ist der auf der Oberseite der Unterlegscheibe 38 aufruhende Rand des Nachlaufelements 40 mit der Unterlegscheibe 38 verklebt oder in anderer Weise verbunden, so daß sie durch das zwischen der Distanzhülse 32 und dem Bolzenkopf 34 gehaltene Nachlaufelement 40 unverlierbar mit dem Dübel verbunden ist. Wenn die Verklebung beim Setzvorgang dann gesprengt wird, ist dies nicht mehr schädlich, weil ein Verlust der Unterlegscheibe dann nicht mehr möglich ist.

In Figur 1 ist in dem zwischen der Oberseite der Unterlegscheibe und der Innenfläche des schalenförmigen Nachlaufelements gebildeten Hohlraum eine mit einer eingefärbten, fließfähigen Masse 45 gefüllte, zerbrechbare Kapsel angeordnet, dio beim Setzen des Dübels durch das sich flachdrückende Nachlaufelement 40 zerbrochen wird, wobei die fließfähige Masse verdrängt wird und durch Austritt am Umfangsspalt zwischen der Unterlegscheibe 38 und dem Nachlaufelement 40 zusätzlich anzeigt, daß das Nachlaufelement 40 die ebenflächige Form angenommen hat, d.h. die vorgeschriebene Setzkraft erreicht ist.

In den Figuren 3 und 4 ist der Hülsenabschnitt 36 mit den Eindrehungen 37 vor und nach dem Setzen des Dübels gezeigt, wobei die durch eindiffundierten Kohlenstoff aufgekohlte und anschließend gehärtete dünne Oberflächenschicht 48 jeweils in der rechten, im Schnitt dargestellten Hälfte des Hülsenabschnitts 36 angedeutet ist. Dabei ist ersichtlich, daß die gehärtete Schicht 48 allseitig, d.h. auf der mit den Eindrehungen 37 versehenen Außen- und der zylindrischen Innenfläche ebenso wie den Stirnflächen auf dem Hülsenabschnitt angebracht ist. Die Ausbildung von zwei (oder mehr) Eindrehungen 37 im Hülsenabschnitt 36 anstelle einer in Axialrichtung entsprechend höheren einzigen Eindrehung oder auch der Verwendung eines Rohrabschnitts entsprechender Länge mit verringerter Wandstärke - was grundsätzlich ebenfalls möglich wäre - bezweckt die Unterteilung der verformbaren Abschnitte um ungleichmäßige Verformungen des Hülsenabschnitts und dadurch mögliche Funktionsstörungen zu vermeiden.

Es ist ersichtlich, daß im Rahmen des Erfindungsgedankens Abwandlungen und Weiterbildungen des vorstehend beschriebenen Ausführungsbeispiels verwirklichbar sind. So ist die Bestimmung der Setzkraft durch einen entsprechend bemessenen Hülsenabschnitt auch bei einfach oder konisch vom bohrungsinneren Ende her spreizenden Dübeln möglich, wobei der Hülsenabschnitt dann - wenn er gesondert hergestellt ist - zweckmäßig zwischen dem bohrungsinneren Ende der Distanzhülse und der Spreizhülse angeordnet wird, oder die Distanzhülse selbst wird abschnittsweise durch Abdrehen von Material mit dem oder den setzkraftanzeigenden Eindrehungen versehen. In diesen Fällen ist dann zweckmäßig die gesamte Distanzhülse in der beschriebenen Weise oberflächengehärtet.

## Patentansprüche

1. In ein Bohrloch (18) im Untergrund (12) einsetzbarer Spreizdübel (14) mit einer durch Längsschlitzung (22) in Lamellen unterteilten Spreizhülse (20), die durch wenigstens einen in das bohrungsinnere Ende der Spreizhülse, vorzugsweise zwei mit ihren verjüngten Enden aufeinander zu weisend in die gegenüberliegenden Enden der Spreizhülse eingreifende(n) konische(n) Spreizkörper (26, 28) unter radialer Aufweitung aufspreizbar ist, indem ein mit seinem bohrungsinneren Ende in den bohrungsinneren Spreizkörper (26) eingreifender Gewindebolzen (30) angezogen wird, der den gegebenenffalls vorgesehenen bohrungsmündungsseitigen Spreizkörper (28) längsverschieblich durchsetzt und an dessen bohrungsäußerem Ende ein Bolzenkopf (34) bzw. eine Mutter angeordnet ist, welcher bzw. welche über eine den Gewindebolzen umgebende Distanzhülse (32) an der Spreizhülse bzw. dem gegebenenfalls vorgesehenen bohrungsmündungsseitigen Spreizkörper abgestützt ist, wobei an der dem Untergrund zugewandten Unterseite des Bolzenkopfs bzw. der Mutter eine ein zu befestigendes Werkstück (10) auf der Oberfläche des Untergrundes aufspannende Unterlegscheibe (30) und zwischen dem Bolzenkopf bzw. der Mutter und der Spreizhülse bzw. dem bohrungsmündungsseitigen Spreizkörper ein hülsenförmiger Rohrabschnitt (36) aus einem weichen Stahl mit ausgeprägter Fließgrenze (Quetschgrenze) vorgesehen ist, dessen Wandstärke so bemessen ist, daß beim Aufbringen einer dübelspezifischen Setzkraft in diesem Rohrabschnitt gerade Druckspannungen herrschen, welche gleich den bei Erreichen der Fließgrenze (Quetschgrenze) im Material des Rohrabschnitts herrschenden Spannungen sind, dadurch gekennzeichnet, daß der Rohrabschnitt (36) in dem sich bei Erreichen der dübelspezifischen Setzkraft in Axialrichtung verformenden Bereich (37') in einer dünnen Oberflächenschicht (48) gehärtet ist.

2. Dübel nach Anspruch 1, dadurch gekennzeichnet, daß der Rohrabschnitt (36) aus Stahl mit niedrigem Kohlenstoffgehalt hergestellt und in seine zu härtende Oberflächenbereiche vor der Härtung Kohlenstoff entsprechend der Dicke der zu erzielenden Härteschicht (48) eindiffundiert ist.

3. Dübel nach Anspruch 1 oder 2, dadurch gekennzeichnet, daß der Rohrabschnitt von wenigstens einer, vorzugsweise zwei oder mehr in Axialrichtung zueinander versetzten umlaufenden Eindrehungen (37) in einem gesondert zwischen der Distanzhülse (32) und der Spreizhülse (20) bzw. dem bohrungsmündungsseitigen Spreizkörper (28) angeordneten Hülsenabschnitt (36) gebildet ist.

4. Dübel nach Anspruch 3, dadurch gekennzeichnet, daß der Hülsenabschnitt (36) auf seiner Außen- und Innenseite oberflächengehärtet ist.

5. Dübel nach Anspruch 1 oder 2, dadurch gekennzeichnet, daß der Rohrabschnitt von wenigstens einer, vorzugsweise zwei oder mehr in Axialrichtung versetzten umlaufenden Eindrehungen (37) in der Distanzhülse (32) selbst gebildet ist.

6. Dübel nach Anspruch 5, dadurch gekennzeichnet, daß die Distanzhülse (32) auf ihrer Außen- und Innenfläche oberflächengehärtet ist.

7. Dübel nach einem der Ansprüche 1 bis 5, dadurch gekennzeichnet, daß zwischen der Unterseite des Bolzenkopfs (34) bzw. der Mutter und dem zu befestigenden Werkstück (10) ein unter Einfluß einer in Axialrichtung wirkenden relativ geringen Kraft um das Maß (a) der axialen Stauchung des Rohrabschnitts (36) bei Erreichen der dübelspezifischen Setzkraft in Axialrichtung zusammendrückbares Nachlaufelement (40) angeordnet ist.

## Claims

1. Expanding bolt anchor (14) which can be inserted into a hole (18) in a ground (12) and which has an expanding sleeve (20) divided by longitudinal slits (22) into segments, which sleeve can be expanded by at least one conical expander (26, 28) engaging the bore-internal end of the sleeve, preferably by two conical expanders pointing toward one another with their tapered ends and engaging the opposite ends of the sleeve, by tightening a bolt (30) whose bore-internal end engages the bore-internal expander (26) and passes in a longitudinally displaceable manner through the expander (28) that may be provided at the bore-orifice end of the sleeve and which is provided on its bore-external end with a nut or bolt head (34) and through a spacer bushing (32) thrusts against the expanding sleeve, or against the expander provided at the bore-orifice end of the sleeve as the case may be a washer (30) being provided at the bottom of the bolt head or nut facing the ground, which washer clamps the workpiece (10) against the surface of the ground, and a sleeve-like tube section (36) of a soft steel with a pronounced plastic flow limit (compression yield point) is provided between the bolt head or nut and the expanding sleeve or the expander provided at the bore-orifice end of the sleeve as the case may be, the wall thickness of the tube section being so dimensioned that, upon the application of a setting force specific for the bolt anchor, compression stresses will prevail in this tube section which just equal the stresses prevailing in the material of the tube section when the plastic flow limit (compression yield point) is reached, characterized in that the tube section (36) is hardened in a thin surface layer (48) in the area which deforms axially when the anchor-specific setting force is attained.

2. Bolt anchor or Claim 1, characterized in that the tube section (36) is made of steel of low carbon content and carbon is diffused in the surface areas that are to be hardened, prior to hardening, corresponding to the thickness of the hardened layer (48) that is to be achieved.

3. Bolt anchor of Claim 1 or 2, characterized in that the tube section is formed by at least one, preferably two or more, circumferential constrictions (37) separated from one another in the axial direction, in a sleeve section (36) disposed separately between the spacing sleeve (32) and the expanding sleeve (20) or the expander (28) at the bore-orifice end.

4. Bolt anchor of Claim 3, characterized in that the sleeve section (36) is casehardened on its outside and inside.

5. Bolt anchor of Claim 1 or 2, characterized in that the tube section is formed by at least one, preferably two or more, circumferential constrictions (37) in the spacing sleeve (32) itself, set apart from one another in the axial direction.

6. Bolt anchor of Claim 5, characterized in that the spacing sleeve (32) is casehardened on its outer and inner surface.

7. Bolt anchor of any of Claims 1 to 6, characterized in that, between the bottom of the bolt head (34) or nut, as the case may be, and the workpiece (10) to be fastened, a follower element (40) is disposed which is compressible in the axial direction under the influence of a relatively low force acting in the axial direction, by the amount (a) of the axial compression of the tube section (36) when the anchor-specific setting force is attained.

## Revendications

1. Cheville à expansion (14) se posant dans un trou (18) percé dans le matériau-support (12), comportant une douille expansible (20) divisée en lamelles par fendage longitudinal (22) qui peut être expansée radialement par au moins un corps d'expansion conique s'engageant dans l'extrémité intérieure au trou de la douille expansible, de préférence par deux corps d'expansion coniques (26, 28) s'engageant par leurs extrémités amincies, dirigées l'une vers l'autre, dans les extrémités opposées de la douille expansible, par serrage d'une tige filetée (20) qui s'engage par son extrémité intérieure au trou dans le corps d'expansion (26) intérieur au trou, qui traverse avec liberté de déplacement longitudinal le corps d'expansion (28) côté orifice du trou éventuellement prévu, et à l'extrémité extérieure au trou duquel est placé(e) une tête de boulon (34) ou un écrou qui est appuyé(e), par l'intermédiaire d'une douille d'écartement, ou entretoise (32) entourant la tige filetée, sur la douille expansible ou sur le corps d'expansion, côté orifice du trou éventuellement prévu, une rondelle (38) qui serre sur le matériau-support une pièce (10) à fixer étant prévue contre la face inférieure, dirigée vers le matériau-support de la tête de boulon ou de l'écrou et, entre la tête de boulon ou l'écrou et la douille expansible ou le corps d'expansion côté orifice du trou étant prévue une portion tubulaire (36) en forme de douille en acier doux à limite d'écoulement (limite d'élasticité à la compression) marquée, dont l'épaisseur de paroi est telle qu'à l'application d'une force d'ancrage spécifique à la cheville, il régne dans cette portion tubulaire des contraintes de compression égales aux contraintes qui règnent dans la matière de la portion tubulaire quand la limite d'écoulement (limite d'élasticité à la compression) est atteinte, caractérisée par le fait que la portion tubulaire (36) est trempée en une mince couche superficielle (48) dans la zone (37') qui se déforme en direction axiale lorsque la force d'ancrage spécifique à la cheville est atteinte.

2. Cheville selon la revendication 1, caractérisée par le fait que la portion tubulaire (36) est en acier à bas carbone et, qu'avant la trempe, du carbone est introduit par diffusion dans ses zones superficielles à tremper en fonction de l'épaisseur de la couche trempée (48) à obtenir.

3. Cheville selon l'une des revendications 1 et 2, caractérisée par le fait que la portion tubulaire est formée d'au moins une, de préférence de deux ou plus de deux gorges circonférentielles (37) espacées en direction axiale dans une portion de douille séparée (36) placée entre la douille entretoise (32) et la douille expansible (20) ou le corps d'expansion côté orifice du trou (28).

4. Cheville selon la revendication 3, caractérisée par le fait que la portion de douille (36) est trempée superficiellement sur sa face extérieure et sa face intérieure.

5. Cheville selon l'une des revendications 1 et 2, caractérisée par le fait que la portion tubulaire est formée d'au moins une, de préférence de deux ou plus de deux gorges circonférentielles (37) espacées en direction axiale dans la douille entretoise (32) elle-même.

6. Cheville selon la revendication 5, caractérisée par le fait que la douille entretoise (32) est trempée superficiellement sur sa face extérieure et sa face intérieure.

7. Cheville selon l'une des revendications 1 à 6, caractérisée par le fait qu'entre la face inférieure de la tête de boulon (34) ou de l'écrou et la pièce (10) à fixer, est placé un élément suiveur (40) compressible en direction axiale d'une quantité égale à la compression axiale (a) de la portion tubulaire (36), sous l'influence d'une force relativement faible agissant en direction axiale quand la force d'ancrage spécifique à la cheville est atteinte.

Fig. 1

Fig. 2

0 138 859

FIG. 3

FIG. 4